# EUROPÄISCHE PATENTSCHRIFT

(11) **EP 3 625 627 B1**
(45) Veröffentlichungstag und Bekanntmachung des Hinweises auf die Patenterteilung: **25.08.2021**
(21) Anmeldenummer: 18746587.7
(22) Anmeldetag: 09.07.2018
(51) Int. Cl.: G05B 19/042, G05B 19/05, H04L 29/08, H04L 12/801, H04L 12/931, G05B 19/418

(54) **SUMMENSTREAMS FÜR ISTZUSTÄNDE UND STEUERSIGNALE EINES VERTEILTEN STEUERUNGSSYSTEMS**
SUM STREAMS FOR ACTUAL CONDITIONS AND CONTROL SIGNALS OF A DISTRIBUTED CONTROL SYSTEM
FLUX DE SOMMES POUR ÉTATS RÉELS ET SIGNAUX DE COMMANDE D'UN SYSTÈME DE COMMANDE RÉPARTI

(30) Priorität: 20.07.2017 EP 17182304
(43) Veröffentlichungstag der Anmeldung: 25.03.2020
(73) Patentinhaber: Siemens Aktiengesellschaft, 80333 München (DE)
(72) Erfinder: CHEN, Feng, 90537 Feucht (DE); GÖTZ, Franz-Josef, 91180 Heideck (DE); KIESSLING, Marcel, 91235 Velden (DE); NGUYEN, An Ninh, 90427 Nürnberg (DE); SCHMITT, Jürgen, 90766 Fürth (DE)
(86) Internationale Anmeldenummer: PCT/EP2018/068467
(87) Internationale Veröffentlichungsnummer: WO 2019/016003

(56) Entgegenhaltungen:
- WO-A1-2005/066728
- DE-A1-102015 213 845
- US-A1- 2017 163 744

## Beschreibung

Steuerungssysteme sind in verschiedenen Ausgestaltungen bekannt. Historisch wurden die Steuerungssysteme zunächst mit eigenständigen Kommunikationssystemen aufgebaut, beispielsweise einem eigenen Bus einer speicherprogrammierbaren Steuerung. Weiterentwicklungen führten sodann zu Feldbus-Systemen, bei denen die Sensoren und die Aktoren über einen Feldbus - beispielsweise den PROFIBUS - mit der gemeinsamen Zentraleinheit verbunden sind.

In jüngerer Zeit werden auch Feldbusse verwendet, die auf Ethernet-Basis arbeiten. Ein derartiger Feldbus ist ein typisches Beispiel eines offenen Kommunikationsnetzes.

Ein offenes Kommunikationsnetz ist ein Kommunikationsnetz, bei dem jede an das Kommunikationsnetz angeschlossene Komponente entsprechend ihren eigenen Vorgaben Daten in das Kommunikationsnetz einspeist und über das Kommunikationsnetz übertragene Daten mitliest. Hingegen ist den angeschlossenen Komponenten nicht bekannt, welche anderen Komponenten an das Kommunikationsnetz angeschlossen sind. Insbesondere können somit an ein offenes Kommunikationsnetz, das im Rahmen der vorliegenden Erfindung eingesetzt wird, auch weitere Komponenten angeschlossen sein, die nichts mit der Steuerung zu tun haben. Wenn - rein beispielhaft - an das Kommunikationsnetz als Komponenten die Zentraleinheit, die Sensoren und die Aktoren angeschlossen sind, können zusätzliche Komponenten vorhanden sein, die miteinander, aber mit weder mit der Zentraleinheit noch den Sensoren noch den Aktoren kommunizieren oder zwar mit mindestens einer dieser Komponenten kommunizieren, aber nicht innerhalb des Steuerverfahrens. Weiterhin ist den angeschlossenen Komponenten - zumindest in der Regel - nicht die Topologie des offenen Kommunikationsnetzes bekannt.

In der Prozessindustrie und der industriellen Automatisierung sind die zu regelnden industriellen technischen Prozesse meist relativ träge. Zykluszeiten - in der Terminologie der vorliegenden Erfindung "Zeitfenster" - können im Bereich von etlichen Millisekunden liegen, oftmals sogar im Bereich oberhalb von 50 ms oder 100 ms. Für derartige Zykluszeiten kann in der Regel auch ein auf Ethernet basierendes Kommunikationsnetz verwendet werden.

Aus der DE 10 2015 213 845 A1 ist ein Steuerverfahren für einen technischen Prozess in der Form von Steuerung von Komponenten innerhalb eines Fahrzeugs bekannt. Im Rahmen dieses Steuerverfahrens erfassen Sensoren eines Steuerungssystems zyklisch Istzustände des industriellen technischen Prozesses und Übermittlung die Istzustände über ein erstes offenes Kommunikationsnetz an eine gemeinsame Zentraleinheit des Steuerungssystems. Die gemeinsame Zentraleinheit ermittelt unter Berücksichtigung der an sie übermittelten Istzustände zyklisch Steuersignale für den industriellen technischen Prozess und übermittelt die Steuersignale über ein zweites offenes Kommunikationsnetzes an Aktoren des Steuerungssystems. Die Aktoren wirken zyklisch entsprechend den an sie übermittelten Steuersignalen auf den technischen Prozess ein. Das Aussenden der Istzustände durch die Sensoren erfolgt zyklisch. Ein Empfang durch die gemeinsame Zentraleinheit innerhalb vorbestimmter Zeiten kann jedoch nicht mit Sicherheit gewährleistet werden. Gleiches gilt für die umgekehrte Kommunikation der gemeinsamen Zentraleinheit zu den Aktoren. Bei der Entgegenhaltung D1 können verschiedene Zeitpunkte festgelegt werden, zu denen die einzelnen Sensoren ihre Istzustände an die Zentraleinheit übermitteln.

Im Rahmen der Übertragung von audiovisuellen Datenströmen sind im Stand der Technik für offene Kommunikationsnetze speziell geschützte Verbindungen bekannt, sogenannte Streams. Ein Stream ist eine Verbindung zwischen einer ersten Komponente und einer zweiten Komponente, die beide an das offene Kommunikationsnetz angeschlossen sind. Bei einem Stream wird gewährleistet, dass an der ersten Komponente - dem sogenannten Talker - eingespeiste Daten mit einer maximalen, vorab bekannten Verzögerung bei der zweiten Komponente - dem sogenannten Listener - eintreffen. Die maximale Verzögerung ist abhängig von den Leitungsabschnitten und den einzelnen Knotenpunkten zwischen aufeinanderfolgenden Leitungsabschnitten von der ersten zur zweiten Komponente. Die maximale Verzögerung wird beim Einrichten des Streams festgelegt.

Die für die audiovisuelle Übertragung von Daten bekannten Maßnahmen können prinzipiell auch im industriellen Umfeld angewendet werden. Es besteht jedoch ein wichtiger Unterschied zwischen audiovisuellen Daten und industriellen Daten. Bei audiovisuellen Daten müssen meist große Datenmengen von genau einem Talker zu genau einem Listener übertragen werden. Bei industriellen Anwendungen hingegen sind zunächst die zu übertragenden Datenmengen bereits erheblich kleiner. Meist müssen pro Zyklus nur einige Byte, maximal einige kByte, übertragen werden. Weiterhin sind bei industriellen Anwendungen nicht nur zwei Komponenten an der Kommunikation beteiligt, sondern viele Komponenten. Insbesondere ist für die Übermittlung der Istzustände jeder Sensor ein Talker, während die Zentraleinheit hierfür ein Listener ist. Umgekehrt ist für die Übermittlung der Steuersignale die Zentraleinheit ein Talker, während jeder Aktor ein Listener ist.

Wenn die aus der audiovisuellen Übertragung von Daten bekannten Maßnahmen direkt und unmittelbar übernommen würden, müssten eine Vielzahl von Streams eingerichtet werden, nämlich für jeden Sensor und jeden Aktor jeweils ein eigener Stream, wobei bei den Sensoren der jeweilige Sensor der Talker und die Zentraleinheit der Listener ist und bei den Aktoren die Zentraleinheit der Talker und jeder Aktor ein Listener ist. Jeder Stream belegt bei jedem Knotenpunkt des Kommunikationsnetzes, über den der Stream geleitet wird, erhebliche Ressourcen. Dieser Ansatz erweist sich daher als zwar prinzipiell möglich, aber nicht praktikabel.

Im Stand der Technik werden die Daten von Steuerungssystemen (also die von den Sensoren erfassten Istzustände und die an die Aktoren zu übermittelnden Steuersignale bzw. allgemein das Prozessabbild) daher ohne weitergehenden Schutz übertragen. Bei der Übertragung wird eine hohe Priorität gewählt und eine grobe Abschätzung der hierfür erforderlichen Bandbreite durchgeführt.

Soweit es die von der gemeinsamen Zentraleinheit an die Aktoren zu übermittelnden Steuersignale betrifft, ist die Vorgehensweise des Standes der Technik relativ problemlos. Insbesondere kann auf Seiten der gemeinsamen Zentraleinheit auf relativ einfache Weise gewährleistet werden, dass die Steuersignale für die Aktoren sequenziell nacheinander in das offene Kommunikationsnetz eingespeist werden. Die Sensoren speisen ihre Istzustände jedoch unkoordiniert in das offene Kommunikationsnetz ein. In dem Kommunikationsnetz können daher "Schwebungen" auftreten. Eine Schwebung tritt auf, wenn mehrere Sensoren ihre Istzustände derart in das Kommunikationsnetz einspeisen, dass bei der Zentraleinheit oder an einem der Knotenpunkte eine kurzzeitige Überlastung auftritt. Aufgrund der Überlastung können von der Zentraleinheit bzw. in dem betroffenen Knotenpunkt die Daten eines der betreffenden Sensoren nicht gepuffert werden, so dass es zu einem Datenverlust kommt. Ein derartiger Datenverlust führt in der Regel zu einer Störung des Steuerungsprozesses als solchem.

Auch andere Ereignisse können den Steuerungsprozess beeinflussen. Beispielsweise kann sich aufgrund einer anderen, nicht mit dem Steuerungsprozess als solchem zusammenhängenden Kommunikation die Latenzzeit einzelner Knotenpunkte verändern. Auch dies kann zu einer kurzzeitigen Überlastung eines Knotenpunkts führen.

Mit der Einrichtung von Streams zwischen den beteiligten Komponenten (Sensoren, gemeinsame Zentraleinheit, Aktoren) könnten derartige Probleme vermieden werden. Die Einrichtung von Streams zwischen jeweils nur zwei Komponenten, wie sie standardmäßig der Fall ist, ist jedoch inpraktikabel.

Die Aufgabe der vorliegenden Erfindung besteht darin, Möglichkeiten zu schaffen, mit vernünftigem Aufwand eine geschützte Kommunikation zwischen den beteiligten Komponenten zu realisieren.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 5.

Erfindungsgemäß wird ein Steuerverfahren der eingangs genannten Art dadurch ausgestaltet,
- dass die Sensoren die Istzustände über eine den Sensoren gemeinsame erste geschützte Verbindung eines ersten offenen Kommunikationsnetzes an die gemeinsame Zentraleinheit übermitteln,
- dass die gemeinsame Zentraleinheit die Istzustände über eine den Aktoren gemeinsame zweite geschützte Verbindung eines zweiten offenen Kommunikationsnetzes an die Aktoren übermittelt und
- dass jedem Sensor innerhalb des Zeitfensters ein jeweiliger senderseitiger Teilbereich zugeordnet ist, innerhalb dessen der jeweilige Sensor die von ihm erfassten Istzustände dem ersten offenen Kommunikationsnetz zuführt,
- dass die übermittelten Istzustände innerhalb eines mit dem jeweiligen senderseitigen Teilbereich korrespondierenden jeweiligen empfängerseitigen Teilbereichs des Zeitfensters bei der Zentraleinheit eintreffen und
- dass die senderseitigen Teilbereiche der Sensoren derart bestimmt sind, dass die empfängerseitigen Teilbereiche zueinander disjunkt sind.

Erfindungsgemäß werden also insgesamt nur zwei geschützte Verbindungen eingerichtet, nämlich zum einen die erste geschützte Verbindung zwischen den Sensoren und der gemeinsamen Zentraleinheit und zum anderen die zweite geschützte Verbindung zwischen der gemeinsamen Zentraleinheit und den Aktoren.

Die Kommunikation von der gemeinsamen Zentraleinheit zu den Aktoren über die gemeinsame zweite geschützte Verbindung ist relativ problemlos. Denn in Abweichung zur üblichen Vorgehensweise bei audiovisuellen Streams existieren zwar mehr als zwei Beteiligte. Von den Beteiligten speist aber nur ein einziger Beteiligter, nämlich die gemeinsame Zentraleinheit, Daten in die zweite geschützte Verbindung ein. Die gemeinsame Zentraleinheit kann daher sequenziell nacheinander die Steuersignale an die Aktoren ausgeben. Jeder Aktor kann mithören und aus den über die zweite gemeinsame geschützte Verbindung übertragenen Daten die für ihn bestimmten Steuersignale herausfiltern.

Bezüglich der Kommunikation von den Sensoren zu der gemeinsamen Zentraleinheit "weiß" jedoch ebenso wie im Stand der Technik keiner der Sensoren, dass auch die anderen Sensoren die jeweils von ihnen erfassten Istzustände über die gemeinsame erste geschützte Verbindung an die Zentraleinheit übermitteln. Um zu gewährleisten, dass es nicht zu zeitlichen Konflikten bei der Übermittlung der Istzustände an die gemeinsame Zentraleinheit kommt, wird daher jedem beteiligten Sensor innerhalb des Zeitfensters der jeweilige senderseitige Teilbereich zugeordnet, innerhalb dessen der jeweilige Sensor die von ihm erfassten Istzustände dem ersten offenen Kommunikationsnetz zuführt. Dadurch kann gewährleistet werden, dass die übermittelten Istzustände sequenziell nacheinander bei der Zentraleinheit eintreffen.

Um für die Datenübertragung über die erste geschützte Verbindung die senderseitigen Teilbereiche korrekt zu ermitteln, hat es sich als vorteilhaft erwiesen,
- dass für die Sensoren der jeweilige senderseitige Teilbereich innerhalb des Zeitfensters zunächst vorläufig angesetzt wird,
- dass sodann für jeden senderseitigen Teilbereich ermittelt wird, welcher empfängerseitige Teilbereich auf Seiten der gemeinsamen Zentraleinheit mit dem jeweiligen senderseitigen Teilbereich korrespondiert, und
- dass schließlich die senderseitigen Teilbereiche innerhalb des Zeitfensters derart verschoben werden, dass die empfängerseitigen Teilbereiche zueinander disjunkt sind.

In der Regel wird hierbei zusätzlich ein gewisser Sicherheitsabstand der empfängerseitigen Teilbereiche voneinander eingehalten. Dies ist jedoch nicht zwingend erforderlich.

Die Kommunikation von dem jeweiligen Sensor zur gemeinsamen Zentraleinheit erfolgt über eine jeweilige Sequenz von sequenziell aufeinanderfolgenden Leitungsabschnitten des ersten offenen Kommunikationsnetzes. Hierbei sind unmittelbar aneinander angrenzende Leitungsabschnitte der jeweiligen Sequenz über jeweils einen Knotenpunkt (eine sogenannte Bridge) miteinander verbunden. Jeder Knotenpunkt leitet die von dem jeweiligen Sensor übermittelten Istzustände mit einer jeweiligen Verzögerungszeit weiter. Jeder Knotenpunkt gewährleistet weiterhin für jede geschützte Verbindung, an der er beteiligt ist, dass die Verzögerungszeit, mit der er die von ihm empfangenen Daten weiterleitet, zwischen einem für den jeweiligen Knotenpunkt vorbestimmten Minimalwert und einem für den jeweiligen Knotenpunkt vorbestimmten Maximalwert liegt. Dies gilt für jede geschützte Verbindung und damit auch die erste geschützte Verbindung des ersten Kommunikationsnetzes. Ausgehend von dem dem jeweiligen Sensor zugeordneten senderseitigen Teilbereich, ist es somit möglich, durch Aufaddieren der vorbestimmten Minimalwerte der Knotenpunkte einen frühestmöglichen Zeitpunkt zu ermitteln, zu dem die entsprechenden Istzustände frühestens bei der gemeinsamen Zentraleinheit eintreffen können. In analoger Weise ist es, ausgehend von dem dem jeweiligen Sensor zugeordneten senderseitigen Teilbereich möglich, durch Aufaddieren der vorbestimmten Maximalwerte der Knotenpunkte einen spätestmöglichen Zeitpunkt zu ermitteln, zu dem die entsprechenden Istzustände spätestens bei der gemeinsamen Zentraleinheit eintreffen können. Der jeweilige empfängerseitige Teilbereich ist somit durch den frühestmöglichen Zeitpunkt und den spätestmöglichen Zeitpunkt bestimmt. Wenn später der senderseitige Teilbereich verschoben wird, verschiebt sich der korrespondierende empfängerseitige Teilbereich 1:1 mit dieser Verschiebung. Wenn also beispielsweise der senderseitige Teilbereich um 50 µs vorverlegt wird, verschiebt sich auch der korrespondierende empfängerseitige Teilbereich um 50 µs nach vorne.

Die Maximalwerte der Knotenpunkte müssen zwingend explizit gegeben sein. Die Minimalwerte können explizit gegeben sein. Alternativ ist es möglich, dass die vorbestimmten Minimalwerte zu Null gesetzt werden.

In aller Regel weisen das erste offene Kommunikationsnetz und das zweite offene Kommunikationsnetz mindestens einen gemeinsamen Leitungsabschnitt auf, über den sowohl die Übermittlung der Istzustände an die gemeinsame Zentraleinheit als auch die Übermittlung der Steuersignale an die Aktoren erfolgt. Insbesondere ist oftmals nur ein einziges Ethernet als (gemeinsames) Kommunikationsnetz gegeben, an das die gemeinsame Zentraleinheit einmal (1x) angeschlossen ist, so dass über diese Verbindung zwangsweise alle Kommunikationen der gemeinsamen Zentraleinheit mit den Sensoren und den Aktoren erfolgen müssen.

Die Aufgabe wird weiterhin durch ein Steuerungssystem mit den Merkmalen des Anspruchs 6 gelöst. Erfindungsgemäß wird ein Steuerungssystem der eingangs genannten Art dadurch ausgestaltet,
- dass die Sensoren und die gemeinsame Zentraleinheit über ein erstes offenes Kommunikationsnetz miteinander verbunden sind,
- dass die gemeinsame Zentraleinheit und die Aktoren über ein zweites offenes Kommunikationsnetz miteinander verbunden sind und
- dass die Sensoren, die gemeinsame Zentraleinheit, die Aktoren, das erste offene Kommunikationsnetz und das zweite offene Kommunikationsnetz derart ausgebildet sind, dass sie im Betrieb gemäß dem Steuerverfahren miteinander zusammenwirken.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Steuerungssystem und einen industriellen technischen Prozess,
- FIG 2: ein Zeitdiagramm,
- FIG 3: eine geschützte Verbindung,
- FIG 4: ein Datenpaket,
- FIG 5: eine weitere geschützte Verbindung,
- FIG 6: ein weiteres Datenpaket,
- FIG 7 bis 11: Zeitdiagramme, und
- FIG 12: ein Steuerungssystem.

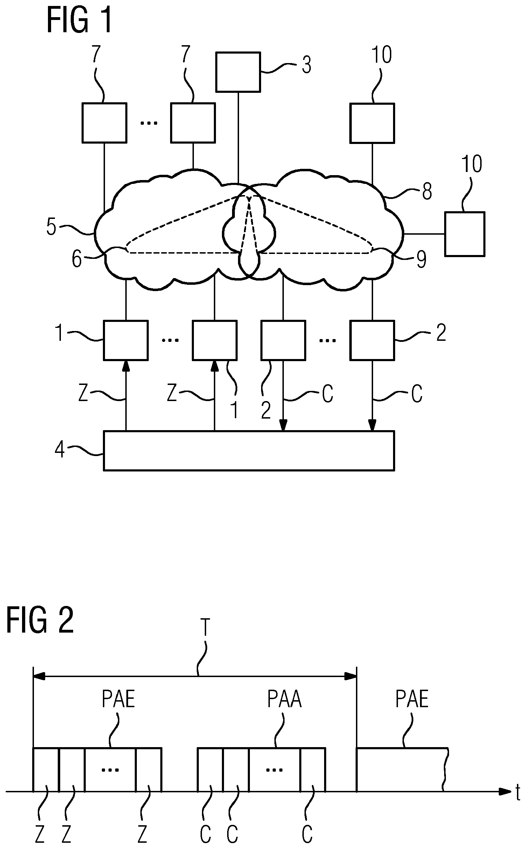

Gemäß FIG 1 weist ein Steuerungssystem eine Mehrzahl von Sensoren 1, eine Mehrzahl von Aktoren 2 und eine gemeinsame Zentraleinheit 3 auf. Bei der Zentraleinheit 3 kann es sich beispielsweise eine speicherprogrammierbare Steuerung oder um eine Zentraleinheit einer speicherprogrammierbaren Steuerung handeln. Die Sensoren 1 und die Aktoren 2 sind Peripheriegeräte.

Die Sensoren 1 erfassen zyklisch Istzustände Z eines industriellen technischen Prozesses 4, beispielsweise einer Produktionsmaschine oder eines chemischen Prozesses. Die Istzustände Z können beispielsweise Positionssignale, Temperaturen, binäre Signale wie beispielsweise das Ansprechen eines Endschalters usw. sein. Nachfolgend wird davon ausgegangen, dass jeder Sensor 1 einen einzelnen Istzustand Z erfasst. Die Sensoren 1 könnten jedoch auch jeweils mehrere Istzustände Z erfassen.

Die Sensoren 1 und die Zentraleinheit 3 sind über ein erstes offenes Kommunikationsnetz 5 miteinander verbunden. Innerhalb des ersten offenen Kommunikationsnetzes 5 übermitteln die Sensoren 1 die von ihnen erfassten Istzustände Z über eine erste geschützte Verbindung 6 an die Zentraleinheit 3. Die erste geschützte Verbindung 6 ist für die Sensoren 1 gemeinsam.

Das Kommunikationsnetz 5 ist deshalb ein offenes Kommunikationsnetz, weil an das Kommunikationsnetz 5 auch andere Komponenten 7 angeschlossen sein können, die eigenständig von den Istzuständen Z verschiedene Daten über das Kommunikationsnetz 5 übertragen können. Es ist möglich, dass die anderen Komponenten 7 nur untereinander, aber weder mit der Zentraleinheit 3 noch mit den Sensoren 1 kommunizieren. Es ist jedoch ebenso möglich, dass die anderen Komponenten 7 auch mit der Zentraleinheit 3 und/oder mit den Sensoren 1 kommunizieren. In diesem Fall erfolgt die Kommunikation jedoch außerhalb des erfindungsgemäßen Steuerverfahrens. Das erste offene Kommunikationsnetz 5 kann beispielsweise als Ethernet ausgebildet sein.

Die erste geschützte Verbindung 6 ist eine geschützte Verbindung, weil durch die Art der Verbindung 6 gewährleistet ist, dass Daten, die von den Sensoren 1 über die erste geschützte Verbindung 6 an die Zentraleinheit 3 übermittelt werden, binnen einer vorbestimmten maximalen Latenzzeit bei der Zentraleinheit 3 eintreffen. Zwischen dem Einspeisen der Daten - hier des von dem jeweiligen Sensor 1 erfassten jeweiligen Istzustands Z - in das erste offene Kommunikationsnetz 5 durch einen der Sensoren 1 und dem Eintreffen dieser Daten bei der Zentraleinheit 3 vergeht also maximal die Latenzzeit. Die Latenzzeit kann von Sensor 1 zu Sensor 1 verschieden sein. Sie ist aber für jeden Sensor 1 gegeben. Ein Beispiel einer geschützten Verbindung 6 ist ein Stream, wie er beispielsweise von der AVB (= Audio/Video Bridging) Task Group und insbesondere von der TSN (= Time-Sensitive Networking) Task Group in der internationalen Norm IEEE 802.1 festgelegt ist.

Ein Stream ist in der Regel zwischen einem einzelnen Sender (Talker) und einem einzelnen Empfänger (Listener) definiert. Im vorliegenden Fall sind jedoch mehrere Sender vorhanden, nämlich die Sensoren 1. Es ist jedoch bekannt, einen Stream auch zwischen mehreren Sendern und einem einzelnen Empfänger (hier der Zentraleinheit 3) einzurichten. Rein beispielhaft kann auf die PCT/EP2017/055643, eingereicht am 10.03.2017, Anmelderin Siemens AG, verwiesen werden. Weitere Details zum Einrichten werden später noch erläutert werden.

Das Übermitteln der Istzustände Z an die Zentraleinheit 3 erfolgt, ebenso wie das Erfassen der Istzustände Z durch die Sensoren 1, zyklisch. Innerhalb eines vorbestimmten Zeitfensters T übermittelt somit entsprechend der Darstellung in FIG 2 jeder Sensor 1 die von ihm erfassten Istzustände Z einmal (1x) an die Zentraleinheit 3. Die Gesamtheit der Istzustände Z bildet das sogenannte Prozessabbild der Eingänge PAE.

Die Zentraleinheit 3 ermittelt in an sich bekannter Art und Weise zyklisch Steuersignale C für den industriellen technischen Prozess 4. Die Zentraleinheit 3 berücksichtigt hierbei die an sie übermittelten Istzustände Z und gegebenenfalls weitere, interne Daten wie beispielsweise Merker und Timer. Die entsprechende Vorgehensweise ist für speicherprogrammierbare Steuerungen allgemein bekannt. Die Steuersignale C können beispielsweise ein Einschalten oder ein Ausschalten einer Heizung, eines Stellmotors, einer Lampe usw. bewirken. Es kann sich um ein binäre Signale, um diskrete Signale oder um analoge Signale handeln. Letztere werden von der Zentraleinheit 3 in digitaler Form ermittelt und an die Aktoren 2 übermittelt. Sie werden erst nach der Übermittlung an die Aktoren 2 von der digitalen in die analoge Form umgewandelt.

Die Zentraleinheit 3 und die Aktoren 2 sind - analog zu der Verbindung der Zentraleinheit 3 und der Sensoren 1 - über ein zweites offenes Kommunikationsnetz 8 miteinander verbunden. Innerhalb des zweiten offenen Kommunikationsnetzes 8 übermittelt die Zentraleinheit 3 die von ihr ermittelten Steuersignale C über eine zweite geschützte Verbindung 9 an die Aktoren 2. Die zweite geschützte Verbindung 9 ist für die Aktoren 2 gemeinsam. Die Gesamtheit der Steuersignale C bildet das sogenannte Prozessabbild der Ausgänge PAA. Nachfolgend wird davon ausgegangen, dass die Zentraleinheit 3 für jeden Aktor 2 ein einzelnes Steuersignal C ermittelt. Die Zentraleinheit 3 könnte jedoch auch für die Aktoren 2 jeweils mehrere Steuersignale C ermitteln.

Das Kommunikationsnetz 8 ist deshalb ein offenes Kommunikationsnetz, weil an das Kommunikationsnetz 8 auch andere Komponenten 10 angeschlossen sein können, die eigenständig von den Steuersignalen C verschiedene Daten über das zweite offene Kommunikationsnetz 8 übertragen können. Es ist möglich, dass die anderen Komponenten 10 nur untereinander, aber weder mit der Zentraleinheit 3 noch mit den Aktoren 2 kommunizieren. Es ist jedoch ebenso möglich, dass die anderen Komponenten 10 auch mit der Zentraleinheit 3 und/oder mit den Aktoren 2 kommunizieren. In diesem Fall erfolgt die Kommunikation jedoch außerhalb des erfindungsgemäßen Steuerverfahrens. Das zweite offene Kommunikationsnetz 8 kann analog zum Kommunikationsnetz 5 beispielsweise als Ethernet ausgebildet sein.

Die zweite geschützte Verbindung 9 ist eine geschützte Verbindung, weil durch die Art der Verbindung 9 gewährleistet ist, dass Daten, die von der Zentraleinheit 3 über die zweite geschützte Verbindung 9 an die Aktoren 2 übermittelt werden, binnen einer vorbestimmten maximalen Latenzzeit bei den Aktoren 2 eintreffen. Zwischen dem Einspeisen der Daten - hier des für den jeweiligen Aktor 2 bestimmten jeweiligen Steuersignals C - in das zweite offene Kommunikationsnetz 8 durch die Zentraleinheit 3 und dem Eintreffen dieser Daten bei dem jeweiligen Aktor 2 vergeht also maximal die Latenzzeit. Die Latenzzeit kann von Aktor 2 zu Aktor 2 verschieden sein. Sie ist aber für jeden Aktor 2 gegeben.

Ein Beispiel einer geschützten Verbindung 9 ist - wie zuvor - ein Stream, wie er von der Audio/Video Bridging Task Group und insbesondere von der Time-Sensitive Networking Task Group in der internationalen Norm IEEE 802.1 festgelegt ist. Analog zum Einrichten eines Streams zwischen zwischen mehreren Sendern und einem einzelnen Empfänger ist es auch bekannt, einen Stream zwischen einem einzelnen Sender (hier der Zentraleinheit 3) und mehreren Empfängern (hier den Aktoren 2) einzurichten. Dies entspricht dem Standard-Prinzip, wie es von der AVB Task Group und insbesondere von der TSN Task Group in der Norm IEEE 802.1 festgelegt ist.

Das Übermitteln der Steuersignale C an die Aktoren 2 erfolgt zyklisch. Innerhalb des vorbestimmten Zeitfensters T übermittelt somit entsprechend der Darstellung in FIG 2 die Zentraleinheit 3 an jeden Aktor 2 einmal (1x) das für den jeweiligen Aktor 2 bestimmte Steuersignal C. Die Aktoren 2 wirken sodann entsprechend den an sie übermittelten Steuersignalen C auf den industriellen technischen Prozess 4 ein. Auch das Einwirken auf den industriellen technischen Prozess 4 erfolgt zyklisch.

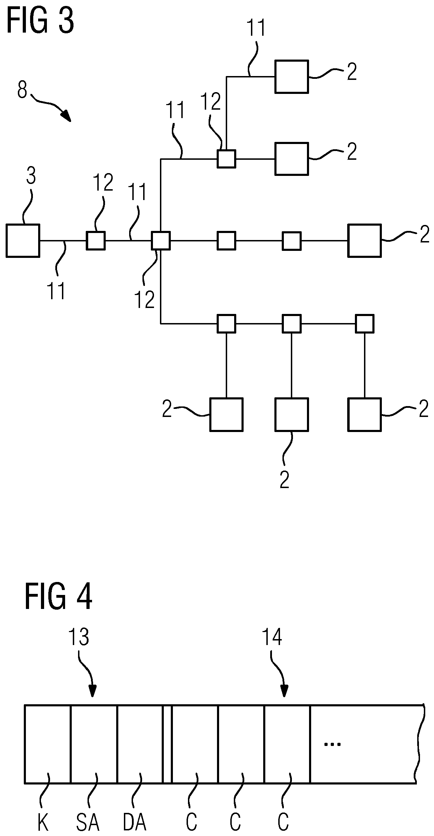

Nachstehend wird die Einrichtung der zweiten geschützten Verbindung 9 erläutert. Hierbei wird angenommen, dass die logische oder physikalische Struktur des zweiten offenen Kommunikationsnetzes 8, soweit es die Zentraleinheit 3 und die Aktoren 2 betrifft, so wie in FIG 3 dargestellt ist. Die Topologie des zweiten offenen Kommunikationsnetzes 8 kann jedoch ebenso auch anders sein. Insbesondere muss sie nicht vorab bekannt sein.

Gemäß FIG 3 ist jeder Aktor 2 über eine jeweilige Sequenz von Leitungsabschnitten 11 des zweiten offenen Kommunikationsnetzes 8 mit der Zentraleinheit 3 verbunden. Über die jeweilige Sequenz erfolgt die Kommunikation von der Zentraleinheit 3 zum jeweiligen Aktor 2. Unmittelbar aneinander angrenzende Leitungsabschnitte 11 sind über jeweils einen Knotenpunkt 12 miteinander verbunden. Die Bezugszeichen 11 und 12 sind in FIG 3 nur für den Pfad von der Zentraleinheit 3 zu einem der Aktoren 2 eingezeichnet.

Die Knotenpunkte 12 - bei einem Stream üblicherweise als Bridges bezeichnet - leiten die von ihnen erhaltenen Daten weiter. Bei einer ungeschützten Verbindung ist die hierbei auftretende Verzögerung nicht vorbestimmt. Bei einer geschützten Verbindung - hier der zweiten geschützten Verbindung 9 - leiten die Knotenpunkte 12 die von ihnen erhaltenen Daten mit einer jeweiligen maximalen Verzögerungszeit weiter. Die Knotenpunkte 12 können dies gewährleisten, weil beim Einrichten der zweiten geschützten Verbindung 9 jeder beteiligte Knotenpunkt 12 prüft, ob seine internen Ressourcen für die im Rahmen der einzurichtenden geschützten Verbindung geforderte Performance (insbesondere bezüglich Datenmenge und Datendurchsatz) ausreichen. Wenn dies der Fall ist, reserviert der jeweilige Knotenpunkt 12 diese Ressourcen für die einzurichtende geschützte Verbindung. Andernfalls erfolgt eine entsprechende Mitteilung an eine die geschützte Verbindung einrichtende Einrichtung. Die geschützte Verbindung wird in diesem Fall nicht eingerichtet. Aufgrund dieser Vorgehensweise kann jeder beteiligte Knotenpunkt 12 gewährleisten, die geforderte Performance beim späteren Betrieb einzuhalten.

Beim späteren Betrieb ist zwar nicht vorab bekannt, mit welcher tatsächlichen Verzögerungszeit der jeweilige Knotenpunkt 12 die von der Zentraleinheit 3 in die zweite geschützte Verbindung 9 eingespeisten Steuersignale C weiterleitet. Die maximale Verzögerungszeit (also deren Maximalwert) bleibt jedoch gewährleistet. Es kann im Einzelfall weiterhin möglich sein, dass der jeweilige Knotenpunkt 12 auch eine minimale Verzögerungszeit spezifizieren kann. Alternativ kann angenommen werden, dass die minimale Verzögerungszeit (also deren Minimalwert) den Wert Null aufweist.

Die Datenübertragung über die zweite geschützte Verbindung 9 erfolgt in Form von einzelnen Datenpaketen (frames), die gemäß FIG 4 einen Header 13 und Nutzdaten 14 umfassen. Die Steuersignale C sind Bestandteile der Nutzdaten 14. Der Header 13 umfasst zum einen eine Kennung K für die zweite geschützte Verbindung 9 als solche und zum anderen eine logische Quelladresse SA und eine logische Zieladresse DA. Zum Einrichten der zweiten geschützten Verbindung 9 ist es somit insbesondere erforderlich, dass jedem Aktor 2 ein und dieselbe logische Zieladresse DA zugeordnet wird. Im Ergebnis übermittelt die Zentraleinheit 2 somit in der zweiten geschützten Verbindung 9 an jeden Aktor 2 alle Steuersignale C. Damit ist jeder Aktor 2 in der Lage, die für ihn relevanten Steuersignale C herauszufiltern und zu verwenden. Zeitliche Konflikte zwischen den einzelnen Steuersignalen C können bei dieser Vorgehensweise nicht auftreten, da nur ein einziger Sender (die Zentraleinheit 3) vorhanden ist und die Zentraleinheit 3 demzufolge die Wurzel der zweiten geschützten Verbindung 9 ist.

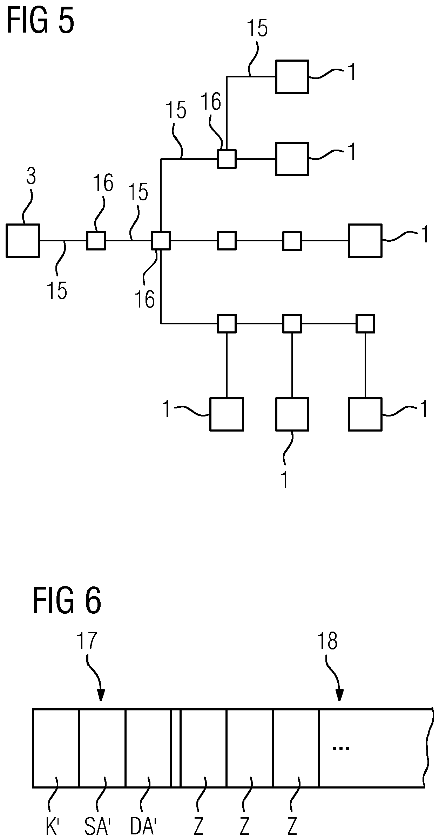

Nachstehend wird die Einrichtung der ersten geschützten Verbindung 6 erläutert. Hierbei wird angenommen, dass die logische oder physikalische Struktur des ersten offenen Kommunikationsnetzes 5, soweit es die Zentraleinheit 3 und die Sensoren 1 betrifft, so wie in FIG 5 dargestellt ist. Die Topologie des ersten offenen Kommunikationsnetzes 5 kann jedoch ebenso auch anders sein. Insbesondere muss sie nicht vorab bekannt sein.

Entsprechend der Darstellung in FIG 5 ist die Topologie des ersten offenen Kommunikationsnetzes 5 ähnlich zur Topologie des zweiten offenen Kommunikationsnetzes 8. Dies ist jedoch nicht zwingend erforderlich.

Gemäß FIG 5 ist jeder Sensor 1 über eine Sequenz von Leitungsabschnitten 15 des ersten offenen Kommunikationsnetzes 5 mit der Zentraleinheit 3 verbunden. Über die jeweilige Sequenz erfolgt die Kommunikation von den Sensoren 1 zur Zentraleinheit 3. Unmittelbar aneinander angrenzende Leitungsabschnitte 15 sind über jeweils einen Knotenpunkt 16 miteinander verbunden. Die Bezugszeichen 15 und 16 sind in FIG 5 nur für den Pfad von einem der Sensoren 1 zur Zentraleinheit 2 eingezeichnet.

Die Knotenpunkte 16 - bei einem Stream üblicherweise als Bridges bezeichnet - leiten die von ihnen erhaltenen Daten weiter. Bei einer ungeschützten Verbindung ist die hierbei auftretende Verzögerung nicht vorbestimmt. Bei einer geschützten Verbindung - hier der ersten geschützten Verbindung 6 - leiten die Knotenpunkte 16 die von ihnen erhaltenen Daten mit einer jeweiligen maximalen Verzögerungszeit weiter. Die Knotenpunkte 16 können dies gewährleisten, weil beim Einrichten der ersten geschützten Verbindung 6 jeder beteiligte Knotenpunkt 16 prüft, ob seine internen Ressourcen für die im Rahmen der einzurichtenden geschützten Verbindung geforderte Performance (insbesondere bezüglich Datenmenge und Datendurchsatz) ausreichen. Wenn dies der Fall ist, reserviert der jeweilige Knotenpunkt 16 diese Ressourcen. Andernfalls erfolgt eine entsprechende Mitteilung an eine die geschützte Verbindung einrichtende Einrichtung. Die geschützte Verbindung wird in diesem Fall nicht eingerichtet. Aufgrund dieser Vorgehensweise kann jeder beteiligte Knotenpunkt 16 gewährleisten, die geforderte Performance beim späteren Betrieb einzuhalten.

Beim späteren Betrieb ist zwar nicht vorab bekannt, mit welcher tatsächlichen Verzögerungszeit der jeweilige Knotenpunkt 16 die von dem jeweiligen Sensor 1 in die erste geschützte Verbindung 6 eingespeisten Istzustände Z weiterleitet. Die maximale Verzögerungszeit (also deren Maximalwert) bleibt jedoch gewährleistet. Es kann im Einzelfall weiterhin möglich sein, dass der jeweilige Knotenpunkt 16 auch eine minimale Verzögerungszeit spezifizieren kann. Alternativ kann angenommen werden, dass die minimale Verzögerungszeit (also deren Minimalwert) den Wert Null aufweist.

Die Datenübertragung über die erste geschützte Verbindung 6 erfolgt auf die gleiche Weise wie über die zweite geschützte Verbindung 9. Die Übertragung erfolgt also in Form von einzelnen Datenpaketen (frames), die gemäß FIG 6 einen Header 17 und Nutzdaten 18 umfassen. Die Istzustände Z sind Bestandteile der Nutzdaten 18. Der Header 17 umfasst zum einen eine Kennung K' für die erste geschützte Verbindung 6 als solche und zum anderen eine logische Quelladresse SA' und eine logische Zieladresse DA'. Zum Einrichten der ersten geschützten Verbindung 6 ist es möglich, dass jedem Sensor 1 ein und dieselbe logische Quelladresse SA' zugeordnet wird. Es ist jedoch ebenso möglich, dass den Sensoren 1 verschiedene logische Quelladressen SA' zugeordnet werden. In beiden Fällen übermitteln die Sensoren 1 in der ersten geschützten Verbindung 6 an die Zentraleinheit 3 alle Istzustände Z.

Im Gegensatz zur zweiten geschützten Verbindung 9 gibt es bei der ersten geschützten Verbindung 6 mehrere Sender, nämlich die Sensoren 1. Die Sensoren 1 "wissen" jedoch nichts voneinander. Wenn den Sensoren 1 daher lediglich vorgegeben ist, innerhalb des Zeitfensters T über die erste geschützte Verbindung 6 ihre jeweiligen Istzustände Z an die Zentraleinheit 3 zu übermitteln, kann es geschehen, dass Istzustände Z, die von verschiedenen Sensoren 1 an die Zentraleinheit 3 übermittelt werden, bei der Zentraleinheit 3 oder einem der Knotenpunkte 16 gleichzeitig eintreffen, so dass sie von der Zentraleinheit 3 bzw. dem entsprechenden Knotenpunkt 16 nicht entgegengenommen werden können. In diesem Fall träte ein Datenverlust ein.

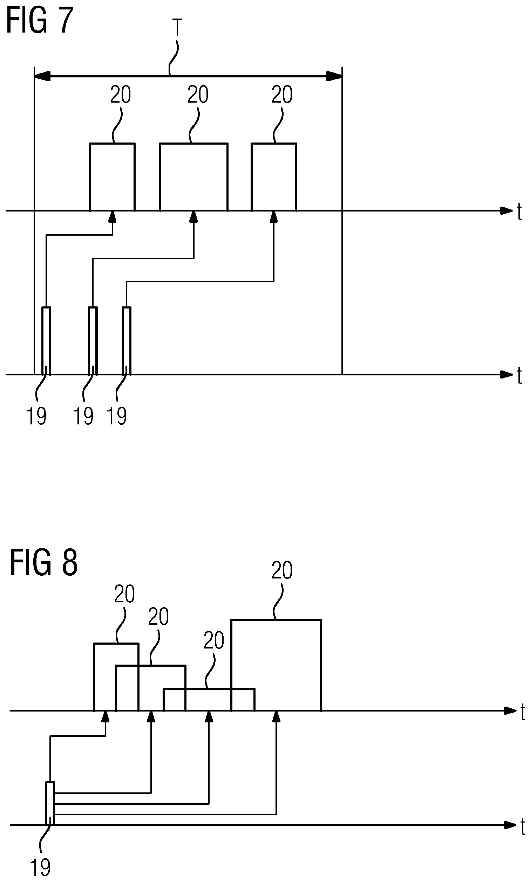

Zur Vermeidung derartiger zeitlicher Konflikte bei der Übermittlung der Istzustände Z an die Zentraleinheit 3 ist entsprechend der Darstellung in FIG 7 innerhalb des Zeitfensters T jedem Sensor 1 ein jeweiliger senderseitiger Teilbereich 19 zugeordnet. Der Sensor 1 führt die von ihm erfassten Istzustände Z innerhalb des ihm zugeordneten Teilbereichs 19 dem ersten offenen Kommunikationsnetz 5 zu. Der jeweilige Teilbereich 19 bezieht sich also nicht auf die gesamte Übermittlung von dem jeweiligen Sensor 1 zur Zentraleinheit 3, sondern nur auf das erste Glied in der Übertragungskette, d.h. das Einspeisen in den an den jeweiligen Sensor 1 angrenzenden Leitungsabschnitt 15. Die Möglichkeit der Zuordnung von senderseitigen Teilbereichen 19 zu einem bestimmten Sender (hier den Sensoren 1) ist als solche bekannt. Rein beispielhaft kann erneut auf die internationale Norm IEEE 802.1 und insbesondere auf die Erweiterungen in IEEE 802.1 Qcc verwiesen werden. Entsprechende Vorgehensweisen sind auch aus PROFINET IRT bekannt.

Mit den senderseitigen Teilbereichen 19 korrespondieren empfängerseitige Teilbereiche 20. Die empfängerseitigen Teilbereiche 20 sind diejenigen Zeitbereiche, innerhalb derer die von einem der Sensoren 1 in dessen senderseitigem Teilbereich 19 in das erste offene Kommunikationsnetz 5 eingespeisten Istzustände Z bei der Zentraleinheit 3 eintreffen. Die empfängerseitigen Teilbereiche 20 müssen zueinander disjunkt sein. Um dies zu gewährleisten, wird für jeden Sensor 1 der jeweilige senderseitige Teilbereich 19 zunächst nur vorläufig angesetzt. Für diesen vorläufigen Ansatz - aber nur für diesen - können die senderseitigen Teilbereiche 19 sogar entsprechend der Darstellung in FIG 8 übereinstimmen. Sodann wird für jeden senderseitigen Teilbereich 19 ermittelt, welcher empfängerseitige Teilbereich 20 auf Seiten der Zentraleinheit 3 mit dem jeweiligen senderseitigen Teilbereich 19 korrespondiert. FIG 8 zeigt auch die korrespondierenden empfängerseitigen Teilbereiche 20. Die empfängerseitigen Teilbereiche 20 sind in FIG 8 unterschiedlich hoch dargestellt, um sie trotz ihrer zeitlichen Überlappung in FIG 8 als solche erkennen und voneinander unterscheiden zu können.

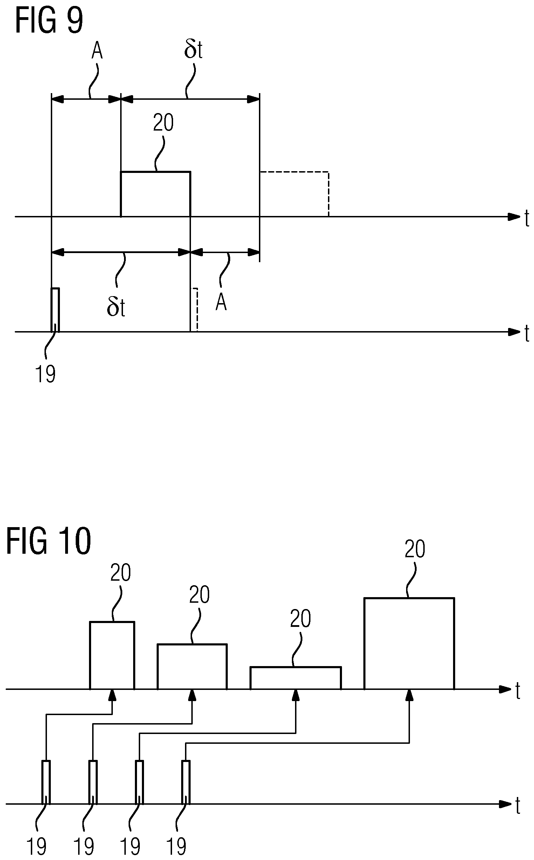

Von entscheidender Bedeutung ist nun, dass gemäß FIG 9 für jeden senderseitigen Teilbereich 19 der zeitliche Versatz A zum korrespondierenden empfängerseitigen Teilbereich 20 konstant ist. Wenn also entsprechend der gestrichelten Darstellung in FIG 9 ein senderseitiger Teilbereich 19 um eine bestimmte Zeitspanne δt verschoben wird, verschiebt sich auch der korrespondierende empfängerseitige Teilbereich 20 um genau diese Zeitspanne δt. Der zeitliche Versatz A wird also unverändert beibehalten. Es ist daher möglich, entsprechend der Darstellung in FIG 8 zunächst für beliebig angesetzte senderseitige Teilbereiche 19 die zugehörigen empfängerseitigen Teilbereiche 20 zu ermitteln und sodann die empfängerseitigen Teilbereiche 20 entsprechend der Darstellung in FIG 10 innerhalb des Zeitfensters T derart anzuordnen, dass sie zueinander disjunkt sind. Vorzugsweise wird zwischen den empfängerseitigen Teilbereiche 20 ein Sicherheitsabstand eingehalten. Dies ist jedoch nicht zwingend erforderlich.

Die zugehörigen zeitlichen Verschiebungen können ohne weiteres ermittelt werden. Aufgrund des Umstands, dass der zeitliche Versatz A zum jeweils korrespondierenden senderseitigen Teilbereich 19 sich nicht ändert, können somit ohne weiteres auch die korrespondierenden senderseitigen Teilbereiche 19 ermittelt werden. Es ist lediglich erforderlich, die senderseitigen Teilbereiche 19 1:1 zur zeitlichen Verschiebung des jeweiligen empfängerseitigen Teilbereichs 20 zu verschieben.

Es ist möglich, dass die senderseitigen Teilbereiche 19 sich nach dem Verschieben zeitlich überlappen. Dies ist jedoch unkritisch, da es nicht auf eine etwaige Überlappung der senderseitigen Teilbereiche 19 ankommt, sondern nur auf die Vermeidung einer Überlappung der empfängerseitigen Teilbereiche 20.

Um die obenstehend erläuterte Vorgehensweise zu implementieren, müssen die empfängerseitigen Teilbereiche 20 bekannt sein. Die Ermittlung des empfängerseitigen Teilbereichs 20 wird nachfolgend für einen einzelnen senderseitigen Teilbereich 19 erläutert. Die Vorgehensweise ist jedoch in völlig analoger Weise für alle senderseitigen Teilbereiche 19 gültig.

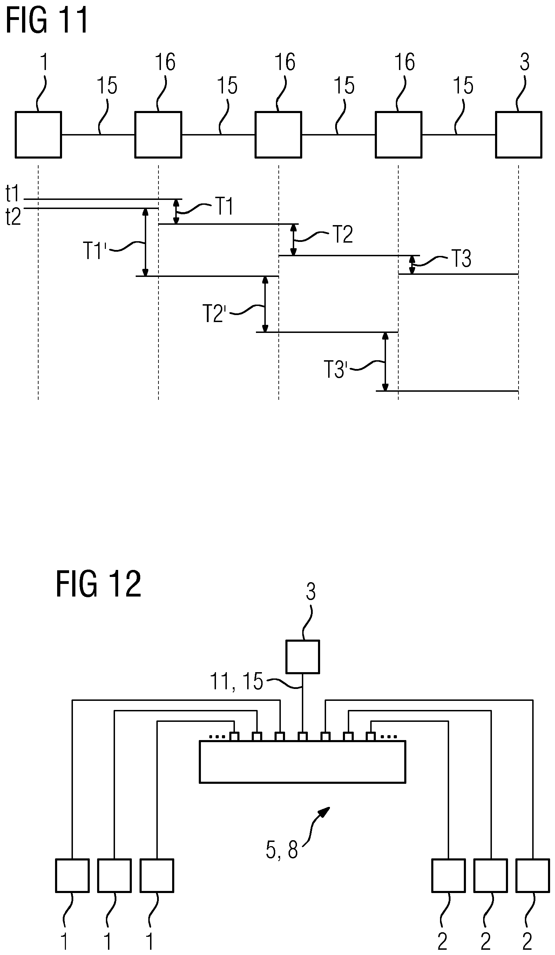

Nachfolgend wird entsprechend der Darstellung in FIG 11 - rein beispielhaft - angenommen, dass der entsprechende Sensor 1 über vier sequentiell aufeinanderfolgende Leitungsabschnitte 15 und hiermit korrespondierend über drei zwischen je zwei dieser vier Leitungsabschnitte 15 angeordnete Knotenpunkte 16 mit der Zentraleinheit 3 verbunden ist. Weiterhin wird angenommen, dass die Übertragungszeiten über die Leitungsabschnitte 15 als solche vernachlässigt werden können. Gegebenenfalls können derartige Übertragungszeiten jedoch mit berücksichtigt werden.

Der betrachtete Sensor 1 führt die von ihm erfassten Istzustände Z innerhalb des Zeitfensters T in dem ihm zugeordneten Teilbereich 19 dem ersten offenen Kommunikationsnetz 5 zu.

Die Grenzen dieses Teilbereich 19 werden nachfolgend mit den Bezugszeichen t1 und t2 versehen. Die Differenz der beiden Grenzen, also t2-t1, entspricht der Dauer des entsprechenden senderseitigen Teilbereichs 19.

Aufgrund der Vernachlässigung der Übertragungszeiten über die Leitungsabschnitte 15 als solche treffen die übermittelten Istzustände Z im gleichen Zeitraum - also in dem sich von t1 bis t2 erstreckenden Intervall - bei dem an den Sensor 1 angrenzenden Knotenpunkt 16 ein. Dieser Knotenpunkt 16 führt die Istzustände Z nach einer Verzögerungszeit dem nächsten Leitungsabschnitt 15 zu. Der genaue Wert der Verzögerungszeit ist nicht bekannt. Es ist jedoch bekannt, dass die Verzögerungszeit minimal einen Wert T1 und maximal einen Wert T1' aufweist.

Der frühestmögliche Zeitpunkt, zu dem dieser Knotenpunkt 16 die Istzustände Z dem nächsten Leitungsabschnitt 15 zuführt, liegt demzufolge bei t1+T1. Der spätestmögliche Zeitpunkt, zu dem dieser Knotenpunkt 16 das Zuführen der Istzustände Z zu dem nächsten Leitungsabschnitt 15 beendet, liegt demzufolge weiterhin bei t2+T1'.

Aufgrund der Vernachlässigung der Übertragungszeiten über die Leitungsabschnitte 15 als solche treffen die übermittelten Istzustände Z im gleichen Zeitraum - also in dem sich von t1+T1 bis t2+T1' erstreckenden Intervall - bei dem nächsten Knotenpunkt 16 ein. Dieser Knotenpunkt 16 führt die Istzustände Z ebenfalls nach einer Verzögerungszeit dem von ihm aus gesehen nächsten Leitungsabschnitt 15 zu. Der genaue Wert der Verzögerungszeit ist wieder nicht bekannt. Es ist jedoch bekannt, dass die Verzögerungszeit minimal einen Wert T2 und maximal einen Wert T2' aufweist.

Der frühestmögliche Zeitpunkt, zu dem dieser Knotenpunkt 16 die Istzustände Z dem nächsten Leitungsabschnitt 15 zuführt, liegt demzufolge bei t1+T1+T2. Der spätestmögliche Zeitpunkt, zu dem dieser Knotenpunkt 16 das Zuführen der Istzustände Z zu dem nächsten Leitungsabschnitt 15 beendet, liegt demzufolge weiterhin bei t2+T1'+T2'.

Diese Vorgehensweise kann für jeden Knotenpunkt 16 wiederholt werden. In dem gegebenen Beispiel, bei dem zwischen dem Sensor 1 und der Zentraleinheit 3 drei Knotenpunkte 16 angeordnet sind, ergibt sich somit der frühestmögliche Zeitpunkt, zu dem die Istzustände Z des betrachteten Sensors 1 bei der Zentraleinheit 3 eintreffen, zu t1+T1+T2+T3, wobei T3 die minimale Verzögerungszeit des an die Zentraleinheit 3 angrenzenden Knotenpunkts 16 ist. In analoger Weise ergibt sich der spätestmögliche Zeitpunkt, zu dem die Übermittlung der Istzustände Z des betrachteten Sensors 1 an die Zentraleinheit 3 beendet ist, zu t1+T1'+T2'+T3', wobei T3' die maximale Verzögerungszeit des an die Zentraleinheit 3 angrenzenden Knotenpunkts 16 ist.

Im Ergebnis lässt sich somit für jeden Sensor 1 und dessen senderseitigen Teilbereich 19 der jeweilige empfängerseitige Teilbereich 20, ausgehend von dem dem jeweiligen Sensor 1 zugeordneten senderseitigen Teilbereich 19, durch Aufaddieren der vorbestimmten Minimalwerte T1, T2, T3 usw. der Knotenpunkte 16 und Aufaddieren der vorbestimmten Maximalwerte T1', T2', T3' usw. der Knotenpunkte 16 ermitteln.

Die Ermittlung der senderseitigen Teilbereiche 19 erfolgt automatisiert über ein P2P-Protokoll, beispielsweise auf der Basis von LRP (= link local reservation protocoll). Nach der Ermittlung der senderseitigen Teilbereiche 19 werden diese an die einzelnen Sensoren 1 übermittelt, beispielsweise zwar über das erste offene Kommunikationsnetz 5, aber außerhalb der ersten geschützten Verbindung 6.

Die Anzahl an Datenpaketen, die pro Zeitfenster T über das erste offene Kommunikationsnetz 5 und hier über die erste geschützte Verbindung 6 von den Sensoren 1 zur Zentraleinheit 3 übermittelt werden, ist in der Regel so groß wie die Anzahl an Sensoren 1. Dies ist deshalb der Fall, weil jeder Sensor 1 die von ihm erfassten Istzustände Z über ein eigenes Datenpaket an die Zentraleinheit 3 übermittelt. Die Ressourcen der beteiligten Knotenpunkte 16 des ersten offenen Kommunikationsnetzes 5, müssen daher im Rahmen der Einrichtung der ersten geschützten Verbindung 6 derart bestimmt werden, dass sie innerhalb der jeweils spezifizierten maximalen Verzögerungszeit Ti' (mit i = 1, 2, 3 usw.) die entsprechende Anzahl an Datenpaketen weiterleiten können.

Zumindest der unmittelbar an die Zentraleinheit 3 angrenzenden Knotenpunkt 16 des ersten offenen Kommunikationsnetzes 5 muss in der Regel alle von den Sensoren 1 übermittelten Datenpakete handhaben können, also unabhängig davon, von welchem Sensor 1 das entsprechende Datenpaket stammt. Bezüglich der anderen Knotenpunkte 16 des ersten offenen Kommunikationsnetzes 5 kann es ausreichen, deren Ressourcen in einem reduzierten Umfang für die erste geschützte Verbindung 6 zu reservieren.

Für die Einhaltung der senderseitigen Teilbereiche 19 durch die Sensoren 1 ist es weiterhin erforderlich, dass die Sensoren 1 miteinander synchronisiert sind. Die Synchronisation als solche ist jedoch nicht Gegenstand der vorliegenden Erfindung. Möglichkeiten zur Synchronisierung sind Fachleuten auch allgemein bekannt. Sie müssen an dieser Stelle daher nicht detailliert erläutert werden.

Soweit obenstehend erläutert, sind das erste offene Kommunikationsnetz 5 und das zweite offene Kommunikationsnetz 8 voneinander verschiedene Kommunikationsnetze. Dies ist jedoch nicht zwingend erforderlich. Vielmehr können das erste offene Kommunikationsnetz 5 und das zweite offene Kommunikationsnetz 8 entsprechend der Darstellung in FIG 12 mindestens einen gemeinsamen Leitungsabschnitt 11, 15 aufweisen, über den sowohl die Übermittlung der Istzustände Z an die Zentraleinheit 3 als auch die Übermittlung der Steuersignale C an die Aktoren 2 erfolgt. Insbesondere ist in der Regel die Zentraleinheit 1 nur über einen einzigen Leitungsabschnitt 11, 15 an die beiden offenen Kommunikationsnetze 5, 8 angeschlossen. Auch weitere Leitungsabschnitte 11, 15 können Bestandteil beider offenen Kommunikationsnetze 5, 18 sein. Weiterhin ist es auch möglich, dass Peripherieeinheiten vorhanden sind, die sowohl die Funktionalität eines Sensors 1 als auch die Funktionalität eines Aktors 2 umfassen (sogenannte gemischte I/O- Einheiten). In diesem Fall ergibt sich ganz von selbst die Übermittlung sowohl der Istzustände Z zur Zentraleinheit 3 als auch der Steuersignale C von der Zentraleinheit 3 über dieselben Leitungsabschnitte 11, 15.

Zusammengefasst betrifft die vorliegende Erfindung somit folgenden Sachverhalt:
Sensoren 1 eines Steuerungssystems erfassen zyklisch Istzustände Z eines industriellen technischen Prozesses 4 und übermitteln sie über eine den Sensoren 1 gemeinsame erste geschützte Verbindung 6 eines ersten offenen Kommunikationsnetzes 5 an eine gemeinsame Zentraleinheit 3 des Steuerungssystems. Dadurch übermittelt innerhalb eines vorbestimmten Zeitfensters T jeder Sensor 1 die von ihm erfassten Istzustände Z einmal an die Zentraleinheit 3. Die Zentraleinheit 3 ermittelt unter Berücksichtigung der an sie übermittelten Istzustände Z zyklisch Steuersignale C für den industriellen technischen Prozess 4 und übermittelt sie über eine mehreren Aktoren 2 des Steuerungssystems gemeinsame zweite geschützte Verbindung 9 eines zweiten offenen Kommunikationsnetzes 8 an die Aktoren 2. Die Zentraleinheit 3 übermittelt dadurch innerhalb des vorbestimmten Zeitfensters T an jeden Aktor 2 einmal die für den jeweiligen Aktor 2 bestimmten Steuersignale C. Die Aktoren 2 wirken zyklisch entsprechend den an sie übermittelten Steuersignalen C auf den industriellen technischen Prozess 4 ein. Jedem Sensor 1 ist innerhalb des Zeitfensters T ein jeweiliger senderseitiger Teilbereich 19 zugeordnet, innerhalb dessen der jeweilige Sensor 19 die von ihm erfassten Istzustände Z dem ersten offenen Kommunikationsnetz 5 zuführt. Die übermittelten Istzustände Z treffen innerhalb eines mit dem jeweiligen senderseitigen Teilbereich 19 korrespondierenden jeweiligen empfängerseitigen Teilbereichs 20 des Zeitfensters T bei der Zentraleinheit 3 ein. Die senderseitigen Teilbereiche 19 der Sensoren 1 sind derart bestimmt, dass die empfängerseitigen Teilbereiche 20 zueinander disjunkt sind.

Die vorliegende Erfindung weist viele Vorteile auf. Insbesondere erfolgt eine effiziente und zuverlässige und auch deterministische Kommunikation zwischen den Sensoren 1, der Zentraleinheit 3 und den Aktoren 2 des Steuerungssystems. Bei einer in der Praxis realistischen Tiefe der Kommunikationsnetze 5, 8 von bis zu sieben Knotenpunkten 12, 16 treten meist Verzögerungszeiten zwischen dem Zuführen von Istzuständen Z bzw. Steuersignal C zum Kommunikationsnetz 5, 8 und deren Eintreffen bei der Zentraleinheit 3 bzw. bei den Aktoren 2 von wenigen Millisekunden (meist maximal 5 ms) auf. Ressourcen in den Knotenpunkten 12, 16 können geschont werden. Insbesondere müssen im Reservierungsprotokoll und der data plane des ersten und des zweiten offenen Kommunikationsnetze 5, 8 nur jeweils ein Eintrag für die beiden geschützten Verbindungen 6, 9 verwaltet werden. In einem Fehlerfall vereinfacht sich die Diagnose, da in beiden Kommunikationsrichtungen - zur Zentraleinheit 3 hin und von der Zentraleinheit 3 weg - jeweils nur eine einzelne geschützte Verbindung 6, 9 geprüft werden muss. Wissen über die Topologie der Kommunikationsnetze 5, 8 ist nicht erforderlich. Es ist lediglich in denjenigen Knotenpunkten 16, über welche die Istzustände Z mehrerer Sensoren 1 weitergeleitet werden, eine entsprechende Reservierung an Ressourcen der entsprechenden Knotenpunkte 16 erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für einen industriellen technischen Prozess (4),
- wobei Sensoren (1) eines Steuerungssystems zyklisch Istzustände (Z) des industriellen technischen Prozesses (4) erfassen und über eine den Sensoren (1) gemeinsame erste geschützte Verbindung (6) eines ersten offenen Kommunikationsnetzes (5) an eine gemeinsame Zentraleinheit (3) des Steuerungssystems übermitteln, so dass innerhalb eines vorbestimmten Zeitfensters (T) jeder Sensor (1) die von ihm erfassten Istzustände (Z) einmal an die gemeinsame Zentraleinheit (3) übermittelt,
- wobei die gemeinsame Zentraleinheit (3) unter Berücksichtigung der an sie übermittelten Istzustände (Z) zyklisch Steuersignale (C) für den industriellen technischen Prozess (4) ermittelt und über eine mehreren Aktoren (2) des Steuerungssystems gemeinsame zweite geschützte Verbindung (9) eines zweiten offenen Kommunikationsnetzes (8) an die Aktoren (2) übermittelt, so dass die gemeinsame Zentraleinheit (3) innerhalb des vorbestimmten Zeitfensters (T) an jeden Aktor (2) einmal die für den jeweiligen Aktor (2) bestimmten Steuersignale (C) übermittelt,
- wobei die Aktoren (2) zyklisch entsprechend den an sie übermittelten Steuersignalen (C) auf den industriellen technischen Prozess (4) einwirken,
- wobei jedem Sensor (1) innerhalb des Zeitfensters (T) ein jeweiliger senderseitiger Teilbereich (19) zugeordnet ist, innerhalb dessen der jeweilige Sensor (19) die von ihm erfassten Istzustände (Z) dem ersten offenen Kommunikationsnetz (5) zuführt,
- wobei die übermittelten Istzustände (Z) innerhalb eines mit dem jeweiligen senderseitigen Teilbereich (19) korrespondierenden jeweiligen empfängerseitigen Teilbereichs (20) des Zeitfensters (T) bei der Zentraleinheit (3) eintreffen und
- wobei die senderseitigen Teilbereiche (19) der Sensoren (1) derart bestimmt sind, dass die empfängerseitigen Teilbereiche (20) zueinander disjunkt sind.

2. Steuerverfahren nach Anspruch 1,
**dadurch gekennzeichnet,**
- **dass** zur Ermittlung der senderseitigen Teilbereiche (19) für die Sensoren (1) der jeweilige senderseitige Teilbereich (19) innerhalb des Zeitfensters (T) zunächst vorläufig angesetzt wird,
- **dass** sodann für jeden senderseitigen Teilbereich (19) ermittelt wird, welcher empfängerseitige Teilbereich (20) auf Seiten der gemeinsamen Zentraleinheit (3) mit dem jeweiligen senderseitigen Teilbereich (19) korrespondiert, und
- **dass** schließlich die senderseitigen Teilbereiche (19) innerhalb des Zeitfensters (T) derart verschoben werden, dass die empfängerseitigen Teilbereiche (20) zueinander disjunkt sind.

3. Steuerverfahren nach Anspruch 2,
**dadurch gekennzeichnet,**
- **dass** die Kommunikation von dem jeweiligen Sensor (1) zur gemeinsamen Zentraleinheit (3) über eine jeweilige Sequenz von sequenziell aufeinanderfolgenden Leitungsabschnitten (15) des ersten offenen Kommunikationsnetzes (5) erfolgt,
- **dass** unmittelbar aneinander angrenzende Leitungsabschnitte (15) der jeweiligen Sequenz über jeweils einen Knotenpunkt (16) miteinander verbunden sind,
- **dass** jeder Knotenpunkt (16) die von dem jeweiligen Sensor (1) übermittelten Istzustände (Z) mit einer jeweiligen Verzögerungszeit weiterleitet,
- **dass** die Verzögerungszeit des jeweiligen Knotenpunkts (16) zwischen einem für den jeweiligen Knotenpunkt (16) vorbestimmten Minimalwert (T1, T2, T3) und einem für den jeweiligen Knotenpunkt (16) vorbestimmten Maximalwert (T1', T2', T3') liegt und
- **dass** der jeweilige empfängerseitige Teilbereich (20), ausgehend von dem dem jeweiligen Sensor (1) zugeordneten senderseitigen Teilbereich (19), durch Aufaddieren der vorbestimmten Minimalwerte (T1, T2, T3) der Knotenpunkte (16) und Aufaddieren der vorbestimmten Maximalwerte (T1', T2', T3') der Knotenpunkte (16) ermittelt wird.

4. Steuerverfahren nach Anspruch 3,
**dadurch gekennzeichnet, dass** die vorbestimmten Minimalwerte (T1, T2, T3) zu Null gesetzt werden.

5. Steuerverfahren nach einem der obigen Ansprüche,
**dadurch gekennzeichnet, dass** das erste offene Kommunikationsnetz (5) und das zweite offene Kommunikationsnetz (8) mindestens einen gemeinsamen Leitungsabschnitt (11, 15) aufweisen, über den sowohl die Übermittlung der Istzustände (Z) an die gemeinsame Zentraleinheit (3) als auch die Übermittlung der Steuersignale (C) an die Aktoren (2) erfolgt.

6. Steuerungssystem für einen industriellen technischen Prozess,
- wobei das Steuerungssystem eine Mehrzahl von Sensoren (1), eine Mehrzahl von Aktoren (2) und eine gemeinsame Zentraleinheit (3) aufweist,
- wobei die Sensoren (1) und die gemeinsame Zentraleinheit (3) über ein erstes offenes Kommunikationsnetz (5) miteinander verbunden sind,
- wobei die gemeinsame Zentraleinheit (3) und die Aktoren (2) über ein zweites offenes Kommunikationsnetz (8) miteinander verbunden sind,
- wobei die Sensoren (1), die gemeinsame Zentraleinheit (3), die Aktoren (2), das erste offene Kommunikationsnetz (5) und das zweite offene Kommunikationsnetz (8) derart ausgebildet sind, dass sie im Betrieb gemäß einem Steuerverfahren nach einem der obigen Ansprüche miteinander zusammenwirken.

## Claims

1. Control method for a technical industrial process (4),
- wherein sensors (1) of a control system cyclically detect actual states (Z) of the technical industrial process (4) and transmit same to a common central unit (3) of the control system via a first protected connection (6) of a first open communication network (5), said connection being common to the sensors (1) and each sensor (1) transmitting the actual states (Z) detected by the sensor to the common central unit (3) once within a specified time window (T),
- wherein the common central unit (3) cyclically ascertains control signals (C) for the technical industrial process (4) while taking into consideration the actual states (Z) transmitted to the central unit and transmits said control signals to multiple actuators (2) of the control system via a second protected connection (9) of a second open communication network (8), said connection being common to the actuators (2), the common central unit (3) thereby transmitting the control signals (C) determined for the respective actuator (2) to each actuator (2) once within the specified time window (T),
- wherein the actuators (2) act cyclically on the technical industrial process (4) in a manner corresponding to the control signals (C) transmitted to the actuators,
- wherein each sensor (1) is assigned a respective transmitter-side sub-region (19) within which the respective sensor (19) supplies the actual states (Z) detected by said sensor to the first open communication network (5) within the time window (T),
- wherein the transmitted actual states (Z) arrive in the central unit (3) within a respective receiver-side sub-region (20) of the time window (T), said sub-region corresponding to the respective transmitter-side sub-region (19), and
- wherein the transmitter-side sub-regions (19) of the sensors (1) are determined such that the receiver-side sub-regions (20) are disjointed relative to one another.

2. Control method according to claim 1,
**characterised** i**n that**
- to ascertain the transmitter-side sub-regions (19) for the sensors (1), the respective transmitter-side sub-region (19) is first temporarily set up within the time window (T),
- it is then determined for each transmitter-side sub-region (19) which receiver-side sub-region (20) corresponds to the respective transmitter-side sub-region (19) on the side of the common central unit (3), and
- finally, the transmitter-side sub-regions (19) are shifted within the time window (T) such that the receiver-side sub-regions (20) are disjointed relative to one another.

3. Control method according to claim 2,
**characterised in that**
- communication from the respective sensor (1) to the common central unit (3) takes place via a respective sequence of sequentially successive line sections (15) of the first open communication network (5),
- directly adjacent line sections (15) of the respective sequence are connected to one another via one node (16) in each case,
- each node (16) forwards the actual states (Z) transmitted by the respective sensor (1) with a respective delay time,
- the delay time of the respective node (16) lies between a minimum value (T1, T2, T3) predetermined for the respective node (16) and a maximum value (T1', T2', T3') predetermined for the respective node (16) and
- the respective receiver-side sub-region (20), starting from the transmitter-side sub-region (19) assigned to the respective sensor (1), is ascertained by adding up the predetermined minimum values (T1, T2, T3) of the nodes (16) and adding up the predetermined maximum values (T1', T2', T3') of the nodes (16).

4. Control method according to claim 3,
**characterised in that** the predetermined minimum values (T1, T2, T3) are set to zero.

5. Control method according to one of the above claims,
**characterised in that** the first open communication network (5) and the second open communication network (8) have at least one common line section (11, 15) via which both the transmission of the actual states (Z) to the common central unit (3) and the transmission of the control signals (C) to the actuators (2) takes place.

6. Control system for a technical industrial process,
- wherein the control system has a plurality of sensors (1), a plurality of actuators (2) and a common central unit (3),
- wherein the sensors (1) and the common central unit (3) are connected to one another via a first open communication network (5),
- wherein the common central unit (3) and the actuators (2) are connected to one another via a second open communication network (8),
- wherein the sensors (1), the common central unit (3), the actuators (2), the first open communication network (5) and the second open communication network (8) are designed in such a way that during operation they interact according to a control method according to one of the above claims.

## Revendications

1. Procédé de commande d'un processus (4) technique industriel,
- dans lequel des capteurs (1) d'un système de commande détectent cycliquement des états (Z) réels du processus (4) technique industriel et les transmettent, par une première liaison (6) protégée, commune aux capteurs (1), d'un premier réseau (5) de communication ouvert à une unité (3) centrale commune du système de commande de manière à ce que, dans un créneau (T) temporel déterminé à l'avance, chaque capteur (1) transmette les états (Z) réels, qu'il a détecté, une fois à l'unité (3) centrale commune,
- dans lequel l'unité (3) centrale commune détermine, en tenant compte des états (Z) réels qui lui sont transmis cycliquement, des signaux (C) de commande du processus (4) technique industriel et les transmet, par une deuxième liaison (9) protégée, commune à plusieurs actionneurs (2) du système de commande, d'un deuxième réseau (8) de communication ouvert aux actionneurs (2) de manière à ce que l'unité (3) centrale commune transmette, dans le créneau (T) temporel déterminé à l'avance, à chaque actionneur (2) une fois les signaux (C) de commande destinés à l'actionneur (2) respectif,
- dans lequel les actionneurs (2) agissent cycliquement sur le processus (4) technique industriel conformément aux signaux (C) de commande qui leur sont transmis,
- dans lequel il est associé à chaque capteur (1) dans le créneau (T) temporel une plage (19) partielle respective du côté de l'émetteur, dans laquelle le capteur (19) respectif envoie au premier réseau (5) de communication ouvert les états (Z) réels, qu'il a détectés,
- dans lequel les états (Z) réels transmis dans une plage (20) partielle respective du côté du récepteur, correspondant à la plage (19) partielle respective du côté de l'émetteur, du créneau (T) temporel arrivent à l'unité (3) centrale et
- dans lequel les plages (19) partielles du côté de l'émetteur des capteurs (1) sont déterminées de manière à ce que les plages (20) partielles du côté du récepteur soient disjointes les unes des autres.

2. Procédé de commande suivant la revendication 1, **caractérisé**
- **en ce que**, pour la détermination des plages (19) partielles du côté de l'émetteur pour les capteurs (1), on applique d'abord provisoirement la plage (19) partielle respective du côté de l'émetteur dans le créneau (T) temporel,
- **en ce que** l'on détermine ensuite pour chaque plage (19) partielle du côté de l'émetteur la plage (20) partielle du côté du récepteur, qui correspond à la plage (19) partielle respective du côté de l'émetteur, et
- **en ce que** finalement, on décale les plages (19) partielles du côté de l'émetteur dans le créneau (T) temporel de manière à ce que les plages (20) partielles du côté du récepteur soient disjointes les unes des autres.

3. Procédé suivant la revendication 2,
**caractérisé**
- **en ce que** la communication du capteur (1) respectif à l'unité (3) centrale commune s'effectue par une séquence respective de tronçons (15) de lignes se succédant séquentiellement du premier réseau (5) de communication ouvert,
- **en ce que** des tronçons (15) de lignes directement voisins les uns des autres de la séquence respective sont reliés entre eux par respectivement un point (16) nodal,
- **en ce que** chaque point (16) nodal achemine avec un temps de temporisation respectif les états (Z) réels transmis par le capteur (1) respectif,
- **en ce que** le temps de temporisation du point (16) nodal respectif est compris entre une valeur (T1, T2, T3) minimum, déterminée à l'avance pour le point (16) nodal respectif, et une valeur (T1', T2', T3') maximum, déterminée à l'avance pour le point (16) nodal respectif et
- **en ce que** on détermine la plage (20) partielle respective du côté du récepteur à partir de la plage (19) partielle du côté de l'émetteur associé aux capteurs (1) respectifs par addition des valeurs (T1, T2, T3) minimum déterminées à l'avance pour des points (16) nodaux et par addition des valeurs (T1', T2', T3') maximum déterminées à l'avance pour des points (16) nodaux.

4. Procédé suivant la revendication 3,
**caractérisé en ce qu'**on fixe les valeurs (T1, T2, T3) minimum déterminées à l'avance à zéro.

5. Procédé suivant l'une des revendications précédentes,
**caractérisé en ce que** le premier réseau (5) de communication ouvert et le deuxième réseau (8) de communication ouvert ont au moins un tronçon (11, 15) de ligne commun, par lequel s'effectue à la fois la transmission des états (Z) réels à l'unité (3) centrale de commande et la transmission des signaux (C) de commande aux actionneurs (2).

6. Système de commande d'un processus technique industriel,
- dans lequel le système de commande a une pluralité de capteurs (1), une pluralité d'actionneurs (2) et une unité (3) centrale commune,
- dans lequel les capteurs (1) et l'unité (3) centrale commune sont reliés entre eux par un premier réseau (5) de communication ouvert,
- dans lequel l'unité (3) centrale commune et les actionneurs (2) sont reliés entre eux par un deuxième réseau (8) de communication ouvert,
- dans lequel les capteurs (1), l'unité (3) centrale commune, les actionneurs (2), le premier réseau (5) de communication ouvert et le deuxième réseau (8) de communication ouvert sont constitués de manière à coopérer entre eux en fonctionnement selon un procédé de commande suivant l'une des revendications précédentes.
